# EUROPÄISCHE PATENTSCHRIFT

(11) **EP 2 260 193 B1**
(45) Veröffentlichungstag und Bekanntmachung des Hinweises auf die Patenterteilung: **29.08.2018**
(21) Anmeldenummer: 09717769.5
(22) Anmeldetag: 11.02.2009
(51) Int. Cl.: F02C 9/54, F02C 9/22, F02C 9/28

(54) **VERFAHREN ZUR REGELUNG EINER GASTURBINE IN EINEM KRAFTWERK UND KRAFTWERK ZUR DURCHFÜHRUNG DES VERFAHRENS**
METHOD FOR REGULATING A GAS TURBINE IN A POWER PLANT AND POWER PLANT TO CARRY OUT THE METHOD
PROCÉDÉ DE RÉGULATION D'UNE TURBINE À GAZ DANS UNE CENTRALE ÉLECTRIQUE ET CENTRALE ÉLECTRIQUE DESTINÉE À METTRE EN APPLICATION LE PROCÉDÉ

(30) Priorität: 05.03.2008 CH 321082008
(43) Veröffentlichungstag der Anmeldung: 15.12.2010
(73) Patentinhaber: Ansaldo Energia IP UK Limited, London W1G 9DQ (GB)
(72) Erfinder: HOFFMANN, Jürgen, 5417 Untersiggenthal (CH); DAXER, Johann Josef, 5417 Untersiggenthal (CH); WIPPEL, Bernhard, 5430 Wettingen (CH); LIEDTKE, Klaus-Dieter, 5304 Endingen (CH)
(74) Vertreter: Bernotti, Andrea
(86) Internationale Anmeldenummer: PCT/EP2009/051573
(87) Internationale Veröffentlichungsnummer: WO 2009/109446

(56) Entgegenhaltungen:
- EP-A- 0 718 470
- EP-A- 1 256 726
- DE-A1- 10 308 384
- US-A1- 2007 031 238
- US-B1- 6 438 484

## Beschreibung

### Technisches Gebiet

Die vorliegende Erfindung bezieht sich auf das Gebiet der Kraftwerkstechnik und betrifft ein Verfahren zum optimierten Betrieb einer Gasturbine in einem Kraftwerk in Bezug auf Leistung, Wirkungsgrad, Emissionen und/ oder Lebensdauerverbrauch. Im Rahmen der Erfindung liegt auch ein Kraftwerk zur Durchführung des Verfahrens.

### Stand der Technik

Ein Verfahren zur Regelung einer Gasturbine, das dem Betreiber oder Operator den sicheren Betrieb eines Gasturbinenkraftwerkes erlaubt, wird gewöhnlich als Betriebskonzept oder Fahrkonzept bezeichnet. Die Erfindung bezieht sich auf die Optimierung des Lastbetriebs, d.h. des Teils eines Betriebskonzeptes, der den Betrieb, an dem die Gasturbine mit einem elektrischen Netz verbunden ist und an dies Leistung abgibt, regelt. In dem Betriebskonzept wird festgelegt, wie verschiedene Parameter der Gasturbine zum sicheren Betrieb der Gasturbine geregelt werden müssen. Das Betriebskonzept wird durch den Regler umgesetzt. Die Leistung einer Gasturbine kann beispielsweise durch Veränderung der mindestens einen Turbineneintrittstemperatur, des Verdichter-Eintrittsmassenstromes oder beider Parameter eingestellt werden. Zur Einstellung des Verdichter-Eintrittsmassenstroms kann beispielsweise die Eintrittsgeometrie des Verdichters über ein verstellbares Vorleitgitter verändert werden.

Die Höhe der Turbineneintrittstemperatur bestimmt im wesentlichen den Lebensdauerverbrauch bzw. die Länge des Inspektionsintervalls der Gasturbine. Sie bestimmt darüber hinaus im wesentlichen die Abgasemissionen der Gasturbine.

Die Leistung einer Gasturbine wird bei konstantem Eintrittsmassenstrom im wesentlichen durch die Höhe der Turbineneintrittstemperatur bestimmt. Die Gasturbinenaustrittstemperatur ist proportional zur Höhe der Turbineneintrittstemperatur und umgekehrt proportional zum Druckverhältnis der Gasturbine.

Der Wirkungsgrad eines kombinierten Gas-Dampfturbinen-Kraftwerks, eines sogenannten Kombikraftwerks, ist proportional zur Höhe der Gasturbinenaustrittstemperatur und dem Gasturbinenwirkungsgrad. Daraus folgt, dass der Gesamtwirkungsgrad und die Leistung eines Kombi-Kraftwerks proportional zur Gasturbineneintrittstemperatur ist.

Der Wirkungsgrad der Gasturbine wird im theoretischen Brayton Cycle bei konstanter Turbineneintrittstemperatur und konstanten Komponentenwirkungsgraden proportional zum Druckverhältnis. In der realen Maschine ist das Druckverhältnis bei konstanter Turbineneintrittstemperatur proportional zum Massenstrom. Real ändern sich jedoch die Komponentenwirkungsgrade als Funktion von Massenstrom und Temperatur. Insbesondere der Kompressorwirkungsgrad ist von dem Massenstrom, der durch die Vorleitreihenstellung geregelt wird, abhängig. Weiter sind beispielsweise Verluste von Eintritten und Austritten oder Diffusoren eine Funktion des Volumen- bzw. Massenstromes. Entsprechendes gilt für den Kessel, dessen Druckverlust für die ihn durchströmenden Heissgase sowie den angeschlossen Wasser- Dampf- Kreislauf. Die Auslegung der Komponenten auf einen Massenstrom hat zur Folge, dass der Wirkungsgrad einer realen Gasturbine und eines realen Gasturbinenkombikraftwerkes nicht proportional zum Druck oder Massenstrom ansteigt, sondern ein Maximum hat. Wird der Massenstrom und damit das Druckverhältnis über dies Maximum angehoben, so sinkt der Wirkungsgrad. Eine Leistungssteigerung des Kraftwerkes über den Betriebspunkt mit Wirkungsgradmaximum hinaus ist in der Regel möglich.

Moderne Gasturbinen werden im oberen Lastbereich, bei einer Lastabsenkung ausgehend von Volllast (oder Baseload) beispielsweise so geregelt, dass zunächst die Turbineneintrittstemperatur (oder Heissgastemperatur), die durch einen Limiter begrenzt ist, reduziert wird. Entsprechend wird der Limiter von Volllastwert auf den Teillastwert reduziert. Anschliessend wird der Ansaugmassenstrom durch eine Regelung des Anstellwinkels mindestens einer verstellbaren Leitschaufelreihe VIGV des Verdichters, der ihrerseits durch ein Limit begrenzt ist, reduziert. Während der Reduktion des Ansaugmassenstromes wird der Brennstoffmassenstrom reduziert, um die Turbineneintrittstemperatur unterhalb des jeweils anzuwendenden Limits zu regeln. Sobald die Turbinenaustrittstemperatur TAT, die bei konstanter Turbineneintrittstemperatur TIT umgekehrt proportional zu dem mit dem abnehmenden Massenstrom sinkenden Druckverhältnis steigt, den relevanten TAT- Limitwert erreicht hat, wird der Brennstoffmassenstrom reduziert, um die TAT unterhalb des Limits zu regeln. Die TIT fällt dann unter ihr Limit. Das Beispiel eines Betriebskonzeptes für eine moderne Gasturbine mit sequentieller Verbrennung ist in der EP0718470 offenbart.

Zum Betrieb einer Gasturbine nach dem in der EP0718470 beschriebenem Konzept ist eine Bestimmung oder näherungsweise Bestimmung einer TIT erforderlich. Als Turbineneintrittstemperatur können verschiedene Temperaturen benutzt werden. Es kann mit einer theoretischen Mischungstemperatur der Heissgase und aller Kühlluftmassenströme nach ISO 2314 / 1989 gearbeitet werden. Es kann bei der Regelung aber beispielsweise auch mit der Heissgastemperatur vor Eintritt in die Turbine, oder der sogenannten "firing Temperature", einer Mischtemperatur nach der ersten Turbinenleitschaufel, gearbeitet werden.

Ein Beispiel für die Bestimmung der TIT ist in der EP1840354 offenbart. Weitere, meist einfachere aber ungenauere Annäherungen, sind dem Fachmann bekannt. Andere Verfahren zur Regelung einer Gasturbine in einem Kraftwerk gemäß dem Stand der Technik sind aus US2007/0031238 oder EP1255726 bekannt. Herkömmlich ist eine Minimierung der Stromgestehungskosten im Sinne einer flexiblen Anpassung von Gasturbineneintrittstemperatur und/oder der Position des Verdichtervorleitgitters nur bei einer Neuinbetriebnahme möglich, bei welcher die entsprechenden Limite für Teillast und Volllast zum Erreichen bestimmter maximaler oder minimaler Lastwerte festgelegt werden. Möchte man beispielsweise bei einer Erhöhung des Brennstoffpreises den Wirkungsgrad unter in Kaufnahme reduzierter Lebensdauer und damit kürzerer Wartungsintervalls durch eine Erhöhung der Temperaturlimite erreichen, wäre hierzu eine Neuinbetriebnahme der Gasturbine erforderlich.

### Darstellung der Erfindung

Der Erfindung liegt die Aufgabe zugrunde, ein Betriebskonzept genanntes Verfahren zur Regelung eines auf einer Gasturbine basierenden Kraftwerks zu schaffen, welches auch ohne Neuinbetriebnahme eine flexible Anpassung des Verfahrens an sich ändernde Optimierungsziele erlaubt.
Die erfindungsgemässe Lösung der Aufgabe wird dadurch bewerkstelligt, dass verschiedene Limite, die das Betriebskonzept einer Gasturbine bestimmen, wie z.B. Limite der Turbineneintrittstemperatur und/oder der Winkel mindestens einer Verdichtervorleitreihe, durch den Kraftwerksoperator während des Betriebes den Erfordernissen angepasst werden können.

Herkömmlich werden die Hauptregelparameter, wie Turbineneintrittstemperatur TIT, Turbinenaustrittstemperatur TAT und der Winkel mindestens einer Verdichtervorleitreihe VIGV innerhalb fester Limite geregelt. Zum Schutz gegen zu hohe Temperaturen oder Volumenströmen, deren Überschreiten schnell zu schweren Schäden an dem Kraftwerk führen würde, sind diese Parameter mit mehrfach redundanten Messungen geschützt. Dabei sind mit einem definierten Sicherheitsabstand zu den Limiten der Regelungen Schutzaktionen wie Schnellabschalten oder Trip der Gasturbine in der Regelung implementiert.

Bei der Anpassung von schutzrelevanten Limiten, wie der TIT, TAT oder der VIGV, muss sichergestellt sein, dass die Schwellwerte, an denen Schutzaktionen ausgelöst werden, entsprechend den Änderungen der Limite mit angepasst werden oder so definiert sind, dass sie einen zuverlässigen Schutz im Rahmen der möglichen Variationen der Limitwerte sicherstellen.

Das erfindungsgemässe Verfahren gibt dem Kraftwerkbetreiber die Möglichkeit, die Stromgestehungskosten jederzeit gemäss den Anforderungen zu minimieren.

Die Stromgestehungskosten hängen im wesentlichen von den durch den Betrieb eines Kraftwerks entstehenden Kosten und Erlösen ab. Kosten sind in erster Linie die vom Kraftwerk zu zahlenden Brennstoffkosten, deren Höhe durch den Nettowirkungsgrad des Kraftwerkes bestimmt wird, den Kosten für Wartung und Instandhaltung des Kraftwerkes, Personalkosten, gegebenenfalls Emissionsabgaben sowie Kapitalkosten, Lizenzkosten und Gebühren für Betriebsgenehmigungen. Erlöse erzielt das Kraftwerk durch den Verkauf der elektrischen Leistung, bei sogenannter "Co-Generation" durch Prozessdampf und Wärme sowie für die Bereitstellung von Leistungsreserven an das Netz.

Das erfindungsgemässe flexible Gasturbinenbetriebskonzept ermöglicht eine Optimierung des Betriebes hinsichtlich Minimierung der Stromgestehungskosten. Hierbei kann während des Betriebs zwischen verschiedenen, das Betriebskonzept des Kraftwerkes bestimmenden, Limiten bei konstanter oder sich ändernder Leistungserzeugung variiert werden. Insbesondere werden die Volllast- und Teillastlimite für die mindestens eine TIT, die Volllast- und Teillastlimite für die mindestens eine TAT sowie das Limit der VIGV Position variiert. Diese Variation der Limite kann beispielsweise der Kraftwerksoperator durch die Auswahl verschiedener Betriebsweisen an der Leitwarte des Kraftwerkes oder der Gasturbine realisieren. Für eine bedienerfreundliche Regelung muss der Operator nicht einzelne Limite anpassen, sondern kann an der Leitwarte verschiedene Betriebsweisen anwählen und der Regler arbeitet dann automatisch mit dem entsprechenden Satz von Limiten. Dies kann z.B. ein wirkungsgradoptimierter Betrieb, ein Betrieb für maximale Leistung, ein Betrieb mit reduzierten NOx Emissionen, ein Betrieb mit reduzierten Teillast CO Emissionen, ein Betrieb mit verlängerten Wartungsintervallen oder eine Kombination von Optimierungszielen sein. Wege zur Realisierung dieser Betriebsweisen werden anhand der nachfolgenden Ausführungsbeispiele aufgezeigt.

Der Kraftwerksoperator kann über eine Eingabe an einem geeigneten Mensch-Maschine Interface, typischerweise der sogenannten Operator Station oder dem Kontrollrechner oder Regler des Kraftwerks, durchführen. Eine Eingabe über eine Leitwarte eines Verbundes von Kraftwerken oder von dem Netzbetreiber ist ebenfalls möglich. Die Optimierungsziele können auch von äussern Bedingungen abhängig definiert werden. Beispielsweise können die Optimierungsziele abhängig von der Jahreszeit vorgegeben sein. Beispielsweise kann es Vorteilhaft sein, das Kraftwerk im
Sommer leistungsoptimiert zu fahren, um den bei Gasturbinen typischen Leistungsrückgang bei hohen ambienten Temperaturen so weit wie möglich auszugleichen und im Winter wirkungsgradoptimiert zu fahren. Unter einem Operator, auch als Fahrer, Leiter oder Führer bezeichnet, hier sind die Personen zu verstehen, die den Betrieb des Kraftwerkes direkt oder indirekt steuern oder überwachen.

Alle erläuterten Vorteile sind nicht nur in den jeweils angegebenen Kombinationen, sondern auch in anderen Kombinationen, in Kombination mit der Regelung weiterer Parameter oder in Alleinstellung verwendbar, ohne den Rahmen der Erfindung zu verlassen.

Neben dem Verfahren ist eine Gasturbine zur Durchführung des Verfahrens Gegenstand der Erfindung. Je nach gewähltem Verfahren oder Kombination von Verfahren muss die Auslegung der Gasturbine angepasst werden, um die Durchführbarkeit des Verfahrens zu gewährleisten.

Die Kühlluftdruckverhältnisse ändern sich bei Gasturbinen abhängig von den Kompressoreintrittbedingungen und dem Betriebszustand. Ausserdem sind sie von der VIGV- Stellung abhängig. Die Kühlluftdruckverhältnisse von vor dem Kompressorende aus dem Kompressor entnommener Kühlluft sinken dabei typischerweise mit Schliessen der VIGV. Um einen sicheren Betrieb zu gewährleisten, sind die Druckverhältnisse beispielsweise so eingestellt, dass sie für den Volllastbetrieb mit der zugehörigen TIT eine ausreichende Kühlung im gesamten ambienten Betriebsbereich gewährleisten. Ausserdem muss für Teillast gewährleistet sein, dass das mit schliessen der VIGV bei Teillast abnehmende Kühlluftdruckverhältnis noch für eine von Teillast TIT abhängige ausreichende Kühlung sorgt.

In der Regel werden Gasturbinen mit einem Standard Betriebskonzept entsprechenden Kühlluftdruckverhältnissen ausgelegt. Bei der Auslegung wird ausserdem beispielsweise eine Druckmarge vorgesehen, um Fertigungstoleranzen und andere Unsicherheiten ausgleichen zu können. Während der Inbetriebnahme wird dann, beispielsweise über Blenden, das richtige Druckverhältnis eingestellt.

Bei herkömmlichen Gasturbinen wird diese Auslegung und Einstellung für ein Standard Betriebskonzept durchgeführt. Die erfindungsgemässe Gasturbine zeichnet sich dadurch aus, dass sie für mindestens die in dem jeweiligen Kraftwerk geplanten Variationen der Limite und der sich daraus ergebenden Betriebskonzepte ausgelegt ist. Ausserdem sind die Druckverhältnisse bei Inbetriebnahme entsprechend der geplanten Variationen der Limite und der sich daraus ergebenden Betriebskonzepte, z.B. durch Blenden, eingestellt.

Gemäss einer weiteren Ausgestaltung sind die Systeme des Kraftwerkes so ausgelegt, dass sie einen dem Betriebskonzept entsprechenden verlängerten Wartungsintervall zulassen.

Um die Wahl von leistungsoptimierten Limiten zu erlauben, sind die elektrischen Systeme, d.h. auch Generatoren und Transformatoren so auszulegen, dass die maximale Kraftwerksleistung, die im Rahmen der spezifischen Limite erreichbar ist, an das Netz abgegeben werden kann. Entsprechend muss auch das Brennstoffsystem für den maximal möglichen Brennstoffmassenstrom ausgelegt werden.

Weiter sind in dem Regler und/ oder der zugehörigen Speichereinheit die verschiedenen Sätze von Limitwerten entsprechend der vorgesehenen Betriebskonzepte abgelegt, so dass zwischen den Limiten umgeschaltet werden kann.

Bei einem Kombikraftwerk ist ausserdem der Wasser-Dampfkreislauf inklusive Kessel für alle möglichen Variation der TAT und des Abgasmassenstromes, die sich aus den verschieden für das Kraftwerk vorgesehen Limitkombination des Gasturbinebetriebskonzeptes ergeben, auszulegen.

### Kurze Erläuterung der Figuren

Weitere Vorteile, Merkmale und Einzelheiten der Erfindung ergeben sich aus der nachfolgenden Betrachtung bevorzugter Ausführungsbeispiele sowie anhand der Zeichnungen; diese zeigen schematisch in
- Fig. 1: ein vereinfachtes Blockschaltbild für ein Kraftwerk mit einer Gasturbine;
- Fig. 2: die verschiedenen VIGV Volllast- Limite einer Gasturbine und der zugehörige Verlauf der Turbineneintrittstemperatur über Last im oberen Lastbereich;
- Fig. 3: den relativen Wirkungsgrad bei Volllast ηᵣₑₗ als Funktion der normierten Volllastleistung P_{BL} bezogen auf den Volllastwirkungsgrad bei Standard Design Bedingungen, wobei die Leistung P_{BL} durch Variation des VIGV Volllast Limits eingestellt wird;
- Fig. 4: TIT Volllast und TIT Teillast Limite einer Gasturbine für Standard Design und lebensdaueroptimiertes Betriebskonzept und der zugehörige Verlauf der VIGV- Stellung und TIT über Last im oberen Lastbereich; und
- Fig. 5: TIT- und TAT Teillast- Limite für CO- Emissionsoptimierten Betrieb im Vergleich zu den Limiten im lebensdaueroptimierten Betrieb sowie der zugehörige Verlauf der VIGV- Stellung und TIT über Last im oberen Lastbereich.

### Wege zur Ausführung der Erfindung

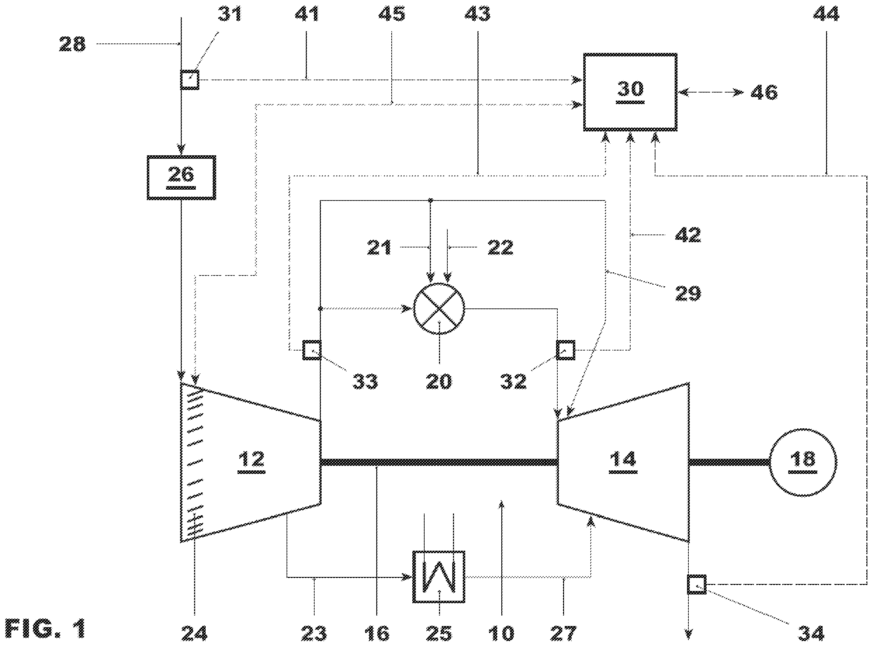

Bei einem in Fig. 1 wiedergegebenen Kraftwerk ist eine Gasturbine 10 ersichtlich, die einen Verdichter 12, eine Brennkammer 20 und eine Turbine 14 umfasst, und welche ein zentraler Bestandteil ist. Verdichter 12 und Turbine 14 sind auf einer gemeinsamen Welle 16 angeordnet, die einen Generator 18 antreibt. Der Verdichter 12 saugt über einen Lufteinlass 28 und einen Filter 26 Luft aus der Umgebung an, verdichtet sie, und gibt die so verdichtete Luft über ein Plenum an die Brennkammer 20 weiter. Der Luftmassenstrom kann über mindestens eine verstellbaren Leitschaufelreihe 24 geregelt werden. Ein Teil der komprimierten Luft wird am Verdichterende als Kühlluft zur Kühlung lebensdauerkritischer Heissgasteile abgezweigt. Diese Hochdruck- Kühlluft wird als Brennkammerkühlluft 21 und als Hochdruck- Turbinenkühlluft 29 verwendet. Je nach Design kann sie mit einem Kühlluftkühler auf eine Kühllufttemperatur rückgekühlt werden (nicht dargestellt). Ein zweiter Teil der komprimierten Luft wird im Verdichter als Kühlluft 23 zur Kühlung lebensdauerkritischer Heissgasteile abgezweigt. Um eine bessere Kühlung zu gewährleisten kann die Kühlluft über einen Kühlluftkühler 25 auf eine Kühllufttemperatur T_{cool} gekühlt werden und als rückgekühlte Kühlluft 27 zur Kühlung lebensdauerkritischer Heissgasteile verwendet werden. Der verbleibende Luftmassenstrom wird in der Brennkammer zur Verbrennung eines über eine Brennstoffzufuhr 22 zugeführten Brennstoffs (flüssig oder gasförmig) verwendet. Das entstandene Heissgas wird in der Turbine 14 unter Arbeitsleistung entspannt und kann dann beispielsweise in einem nachfolgenden Abhitzedampferzeuger zur Erzeugung von Prozessdampf oder Dampf für eine Dampfturbine verwendet werden. Die Messung der Kühllufttemperatur T_{cool} sowie die Regelung des Kühlluftkühlers 25, die in den Gasturbinenregler 30 integriert sein kann, sind nicht dargestellt.

Für die Regelung der Gasturbine ist ein Regler 30 vorgesehen, der in der Figur als einfacher Block mit wenigen Signalleitungen dargestellt ist. Er kann in der Realität jedoch sehr komplex und mit vielen Ein/ Ausgängen für die verschiedenen Anlagenteile ausgestaltet sein kann. Die Signalleitung 46 verbindet den Gasturbinenregler 30 mit dem Unit Regler der die Unit des Kraftwerks inklusive Gasturbine, Kessel und Wasser- Dampfkreislauf regelt.

In einem dem Regler 30 zugeordneten oder in den Regler 30 integrierten Datenspeicher sind verschiedene Sätze von Limitwerten, die die VIGV, TIT, TAT und Kühllufttemperatur T_{cool} für Teillast und Volllast begrenzen, abgelegt.

Zur Regelung der Gasturbine 10 werden grundlegende Prozessgrössen herangezogen, und zwar insbesondere der Anstellwinkel VIGV der mindestens einen verstellbaren Leitschaufel 24 des Verdichters 12 und die Turbineneintrittstemperatur TIT am Eingang der Turbine 14. Zur Regelung der VIGV ist eine Datenleitung 45 zwischen der mindestens einen verstellbaren Leitschaufelreihe 24 und einem Eingang der Regelung 30 vorgesehen. Über diese Leitung 45 wird sowohl die Soll-Position der Leitschaufeln an den Stellmechanismus der VIGV geschickt, als auch die gemessene Ist-Position der VIGV and die Regelung übertragen. Die Turbineneingangstemperatur TIT kann idealisiert am Turbineneintritt gemessen werden und über eine Datenleitung 42 and den Regler übermittelt werden. Praktisch ist dies Aufgrund der hohen TIT bei modernen Gasturbinen nicht möglich, so dass die TIT über das Druckverhältnis der Turbine 14 sowie die TAT angenährt wird. Die TAT wird über einen Sensor 34 gemessen und über die Datenleitung 44 an den Regler übertragen. Zur Bestimmung des Turbinendruckverhältnisses kann der Druck vor und nach der Turbine 14 gemessen werden. In der Praxis wird zur Bestimmung des Druckverhältnisses oft vereinfachend die Messung des Ansaugdruckes 31 und des Verdichteraustrittsdruckes 33, deren Messwerte über die Datenleitungen 41 und 43 an den Regler 30 übermittelt werden angenährt. Die Bestimmung der TIT aus den angegebenen Messgrössen sowie Korrekturen zur Berücksichtigung weiterer Parameter, wie z.B. der relativen Luftfeuchtigkeit oder der VIGV Stellung, sind dem Fachmann bekannt.

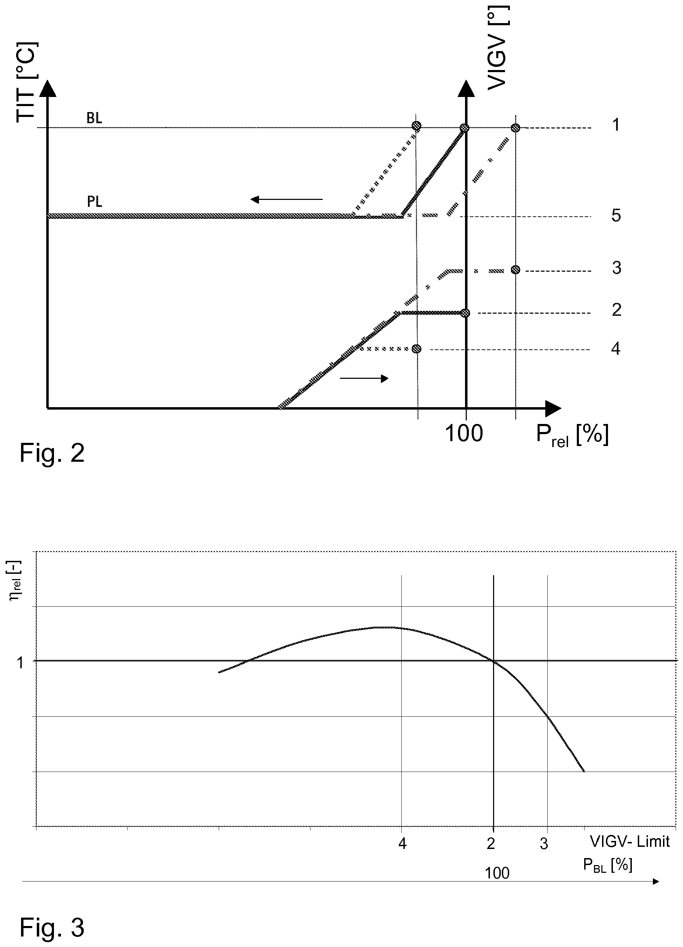

In Fig. 2 sind verschiedene VIGV Volllast Limite einer Gasturbine sowie TIT Volllastlimit 1 und TIT Teillastlimit 5 und der zugehörige Verlauf der Turbineneintrittstemperatur TIT und der VIGV über relative Last Pᵣₑₗ im oberen Lastbereich dargestellt. Diese sind mit durchgezogenen Linien für Standard Design Betrieb, mit gepunkteten Linien für den wirkungsgradoptimierten Betrieb und mit strichpunktierten Linien für den leistungsoptimierten Betrieb schematisch dargestellt.

Der Einfluss der Limite auf das Betriebskonzept wird für eine Lastreduktion ausgehend von Volllast erläutert. Für Standard Design Betrieb (durchgezogene Linie), bei dem die VIGV am VIGV Volllastlimit für Standard Design Betrieb 2 und die TIT am Volllastlimit für Standard Design Betrieb 1 sind, wird zunächst die TIT über die Brennstoffmassenstrom geregelt reduziert bis bei hoher Teillast das TIT Teillastlimit für Standard Design Betrieb 5 erreicht wird. Die VIGV bleibt während dieser Lastabsenkung konstant offen am VIGV Volllastlimit für Standard Design Betrieb 2. Sobald das TIT Teillastlimit für Standard Design Betrieb 5 erreicht wird, wird die TIT konstant gehalten und die Last über die VIGV Position geregelt. Die TIT wird dabei über den Brennstoffmassenstrom konstant auf dem TIT Teillastlimit für Standard Design Betrieb 5 geregelt.

Wird das VIGV Volllastlimit zur Reduktion des maximalen Massenstroms auf das Limit für den wirkungsgradoptimierten Betrieb 4 verkleinert, verschiebt sich das Betriebskonzept im oberen Lastbereich (gepunktete Linie). Die Volllast wird bei dem selben TIT Volllastlimit 1 erreicht. Aufgrund des geringeren Massenstroms wird die Volllastleistung kleiner. Die hier nicht dargestellte TAT ist aufgrund des reduzierten Massenstroms erhöht. In dem dargestellten Beispiel sind sowohl die Komponentenwirkungsgrade der Gasturbine und damit der Gasturbinenwirkungsgrad als auch der Wirkungsgrad des nachgeschalteten Wasser- Dampfkreislaufes bei dem reduzierten Massenstrom bzw. der erhöhten Abgastemperatur verbessert, so das der Gesamtwirkungsgrad des Kraftwerkes verbessert wird. Diese Verbesserung im Wirkungsgrad liesse sich durch einfache Lastreduktion mit dem Standard Design Betriebskonzept nicht realisieren, da nach diesem ausgehend von Volllast zunächst die TIT reduziert würde, was eine Wirkungsgradreduktion mit sich bringt.

Wird das VIGV Vollastlimit zur Erhöhung des maximalen Massenstroms auf das Limit für den leistungsoptimierten Betrieb 3 vergrössert, verschiebt sich das Betriebskonzept im oberen Lastbereich (strichpunktierte Linie). Die Volllast wird bei dem selben TIT Volllastlimit 1 erreicht. Aufgrund des erhöhten Massenstroms bei weiter geöffneter VIGV wird die Volllastleistung grösser.

In Fig. 3 ist der relative Wirkungsgrad bei Volllast ηᵣₑₗ als Funktion der normierten Volllastleistung P_{BL} bezogen auf den Volllastwirkungsgrad bei Standard Design Bedingungen dargestellt. Die Vollastleistung P_{BL} wird durch Variation des VIGV Volllast- Limits eingestellt wird.

Wird in dem gezeigten Beispiel das VIGV Volllast- Limit gegenüber dem Standard Design Limit 2 reduziert, so steigt zunächst der Wirkungsgrad, da sich, wie unter Fig. 2 erläutert, die Wirkungsgrade der Einzelkomponenten bei kleinerem Massenstrom zunächst verbessern. So ist es möglich mit dem VIGV Volllastlimit Limit für wirkungsgradoptimierten Betrieb 4 einen gegenüber dem Standard Design verbesserten Wirkungsgrad zu erzielen.

Wird das VIGV Volllastlimit Limit weiter Reduziert, sinkt mit dem Massenstrom das Druckverhältnis und damit der Wirkungsgrad des theoretischen Prozesses. Ausserdem werden die Hauptkomponenten so weit entfernt von ihrem Designpunkt betrieben, dass die Komponentenwirkungsgrade nicht mehr ansteigen sonder auch wieder abfallen.

Wird in dem gezeigten Beispiel das VIGV Volllast- Limit gegenüber dem Standard Design Limit 2 erhöht, lässt sich die Leistung unter Inkaufnahme eines geringeren Wirkungsgrades erhöhen. Je weiter das VIGV Volllast- Limit vergrössert wird, desto steiler fällt der Wirkungsgrad, so dass die Möglichkeit das VIGV Volllast- Limit 3 zu erhöhen, begrenzt ist. Ausserdem kann die VIGV aufgrund der Pumpgrenze des Verdichters bzw. des erforderlichen Sicherheitsabstandes zur Pumpgrenze oder Limite anderer Komponenten nicht beliebig geöffnet werden. Der Sicherheitsabstand gegenüber der Pumpgrenze ist unter Berücksichtigung von Fertigungstoleranzen, möglicher Verdichterverschmutzung sowie der Netzanforderungen in Bezug auf Unterfrequenzbetrieb zu bestimmen.

Durch das vorgeschlagene variable VIGV Volllast- Limit kann die Gasturbine in einem Bereich um das Standard Design Limit 2, der durch die den Sicherheitsabstande zur Pumpgrenze des Verdichters oder Limite anderer Komponenten und das Wirkungsgradoptimum begrenzt ist, betrieben werden.

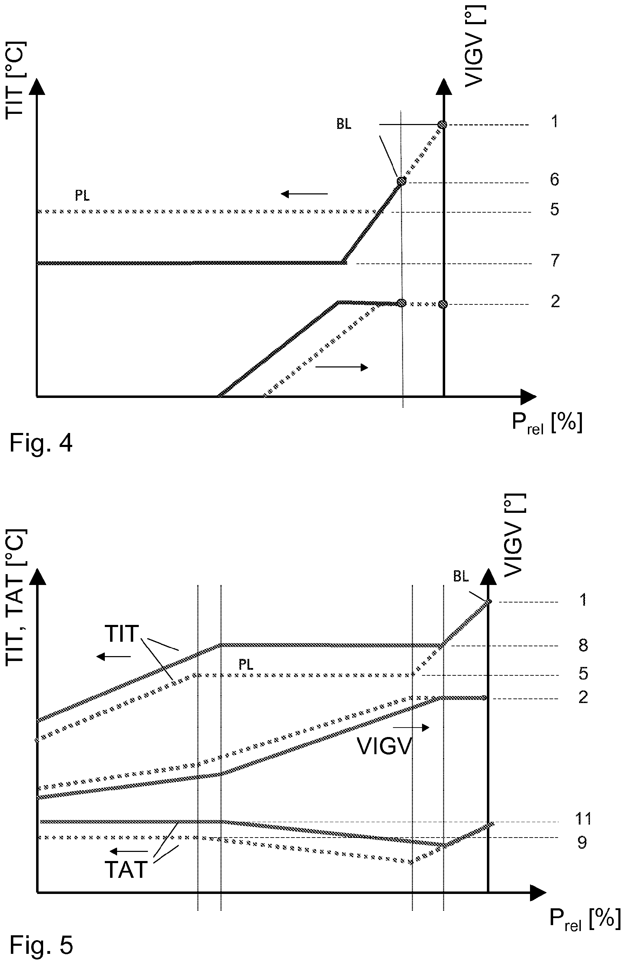

In Fig. 4 sind die Limite und der Verlauf von TIT und VIGV (durchgezogene Linien) bei einem lebensdaueroptimierten Betriebskonzept im oberen Lastbereich dargestellt. Als Referenz sind ausserdem die Limite des Standard Design Betriebskonzeptes im oberen Lastbereich und der entsprechende Verlauf von TIT und VIGV über Last als punktierte Linie dargestellt.

Zur Realisierung eines lebensdaueroptimierten Betriebskonzepts wird bei unverändertem VIGV Volllastlimit 2 ein reduziertes TIT Volllastlimit 6 und ein reduziertes TIT Teillastlimit 7 eingeführt. Aufgrund der reduzierten TIT wird bei gleichem Volllastmassenstrom eine tiefere Volllastleistung erreicht. Der Eckpunkt, bei dem ausgehend von Volllast das TIT Teillastlimit 7 erreicht wird, ist entsprechend der reduzierten Limits ebenfalls zu einer tieferen Last verschoben. Die VIGV fängt entsprechend auch bei tieferer Last zu schliessen an. Um die Lebensdauer bei tiefer Teillast entsprechend anzuheben, kann es ausserdem erforderlich, sein die TAT Limite abzusenken.

Die TIT und TAT Limite können zur Erhöhung der Lebensdauer nicht beliebig reduziert werden. Bei starker Reduktion der Limite kann die Verbrennung instabil werden und es zu Löschpulsationen und/ oder erhöhten Emissionen kommen. Neben der Gasturbine, sind auch die Limite des angeschlossenen Wasser- Dampfkreislaufes inklusive Kessel zu beachten. Bei zu stark vom Auslegungspunkt abweichender resultierender TAT fällt der Wirkungsgrad des Wasser- Dampfkreislaufes stark, so dass der Betrieb trotz erhöhter Lebensdauer unrentabel wird.

Analog zur Lebensdauererhöhung kann eine Reduktion der NOx Emissionen durch Reduktion von mindestens dem TIT Volllastlimit 1 erreicht werden. Weiter kann eine Leistungserhöhung durch Erhöhen der Limite bei reduzierter Lebensdauer erreicht werden.

In Fig. 5 sind die Limite und der Verlauf von TIT, TAT und VIGV (durchgezogene Linien) bei einem CO optimiertem Betriebskonzept dargestellt. Als Referenz sind ausserdem die Limite des Standard Design Betriebskonzeptes und der entsprechende Verlauf von TIT und VIGV über Last als punktierte Linie dargestellt.

Je nach Design von Brennkammer und Brenner kann es bei Vormischverbrennern, die für niedrige NOx-Emissionen bei Volllasttemperatur optimiert sind, beim Teillastbetrieb mit reduzierter TIT zu erhöhten CO Emissionen kommen. Dies ist in der Regel bei dem Standard Designbetriebskonzept kein Problem. Für spezifische Anforderungen, wie z.B. sehr niedrige CO Emissionen im Teillastbetrieb, kann es aber Vorteilhaft sein, die Teillast TIT auf einem gegenüber dem Standard angehobenen Niveau zu halten. Dies wird bei hoher Teillast realisiert, indem ein gegenüber dem Standard erhöhtes TIT Teillastlimit für CO-optimierten Betrieb 8 benutzt wird.

Bei einer Lastreduktion ausgehend von Volllast, wird das erhöhte TIT Teillastlimits für CO-optimierten Betrieb 8 bei einer höheren Last als bei dem Standard- Betriebskonzept erreicht. Dies führt dazu, dass der Ansaugmassenstrom schon bei höherer Last durch Schliessen der VIGV reduziert wird.

Mit, durch Schliessen der VIGV, abnehmenden Massenstrom steigt bei konstanter Teillast- TIT die Abgastemperatur TAT. Sie wird im Standard Betriebskonzept durch das TAT Teillastlimit 9 begrenzt. Sobald die TAT das TAT Teillastlimit für Standard Design Betrieb 9 erreicht hat wird über den Brennstoffmassenstrom nicht die TIT sondern die TAT geregelt.

In dem gezeigten Beispiel ist nicht nur das TIT Teillastlimit angehoben, sondern auch das TAT Teillastlimit vom standard TAT Teillastlimit 9 auf das TAT Teillastlimit für CO-optimierten Betrieb 11 angehoben. Ohne diese Anhebung würde im tiefen Teillastbereich mit der selben TIT gefahren, wie mit dem Standard Betriebskonzept und entsprechend wären auch die gleichen Emissionen zu erwarten. Je nach Design und Erfordernissen ist es sinnvoll nur eines der beiden Limite TIT Teillast oder TAT Teillast für ein CO optimiertes Betriebskonzept anzuheben.

Bei Gasturbinen mit Kühlluftkühler wird die Kühllufttemperatur T_{cool} limitiert, und die Kühlleistung des mindestens einen Kühlluftkühlers so geregelt, dass das Limit der Kühllufttemperatur T_{cool} nicht überschritten wird. Einerseits kann eine Veränderung der Kühllufttemperatur T_{cool} die Lebensdauer kritischer Heissgasteile beeinflussen, andererseits kann sie, je nach Integration des Kühlers in das Gesamtkraftwerk und Ausnutzung der im Kühler entzogenen Wärme, den Gesamtwirkungsgrad des Kraftwerkes beeinflussen. Dabei ist ein Kraftwerk meist so optimiert, dass eine Absenkung der Kühllufttemperatur T_{cool} unter das Standard Design Limit zu einer Wirkungsgradeinbusse führt. Unter Inkaufnahme der Wirkungsgradeinbusse kann aber beispielsweise die Lebensdauerpönale einer erhöhten TIT reduziert werden. Das Limit der Kühllufttemperatur T_{cool} ist somit ein weiterer Parameter zur Flexibilisierung und Optimierung des Betriebskonzeptes.

Die Limite für TIT, TAT, Kühllufttemperatur T_{cool} oder andere Limite der verschieden Betriebskonzepte sind nicht notwenig konstante Werte. Sie können je nach Anforderungen als Funktion der Last, der VIGV oder eines anderen Parameters geregelt sein. Die Betriebskonzepte sind ausserdem nicht auf die gezeigten Beispiele beschränkt. Sie können in verschiedener Art kombiniert oder erweitert werden. Beispielsweise kann ein lebensdaueroptimiertes Betriebskonzept mit reduziertem TIT Volllastlimit 6 und reduziertem TIT Teillastlimit 7 mit den verschieden VIGV Limits für leistungsoptimierten 3 oder wirkungsgradoptimierten 4 Betrieb kombiniert werden.

Die Eckpunkte in den Fig. 2, 4 und 5, in denen die Regelung z.B. von VIGV Regelung auf TIT Regelung wechselt, sind nicht fest an eine relative Last gebunden. Sie können sich abhängig von den ambienten Bedingungen, insbesondere von Kompressoreintrittstemperatur und Druck und dem Zustand der Gasturbine verschieben. Beispielsweise altert jedes Kraftwerk, was zu einer Leistungsreduktion führt, so dass sich, selbst bei sonst identischen Randbedingungen, die Eckpunkte in Richtung tieferer Last verschieben können.

Neben einer Absenkung der TIT und/ oder TAT Limite zur Lebensdauerverlängerung ist es oft auch zweckmässig die Möglichkeit einer Erhöhung der Limite zu ermöglichen, damit eine Leistungssteigerung unter Inkaufnahme von Lebensdauerverbrauch ermöglicht wird.

In einer Ausführung der Erfindung können mehrere Sätze von Limiten angewählt werden, die zu verschiedenen Lebensdauerfaktoren gehören. Diese können es dem Betreiber oder Operator beispielsweise ermöglichen das Kraftwerk mit Standard- Lebensdauer zu betreiben, mit einer um 30%, 50% oder 100% erhöhten Lebensdauer zu betreiben, oder alternativ mit einer um 30% oder 50% reduzierten Lebensdauer zu betreiben.

In einer weiteren Ausführung der Erfindung kann der Betreiber oder Operator die gewünschte Lebensdauer innerhalb eines gewünschten Rahmens vorgeben und die TIT und/ oder TAT Limite werden in Abhängigkeit von dieser Ziellebensdauer angepasst.

Die flexible Betriebsweise erlaubt einen auf Wirkungsgrad und Lebensdauer optimierten Betrieb sowie die Bereitstellung einer signifikanten Leistungsreserve. Abhängig von dem Stromnetz, in das das Kraftwerk Leistung einspeisst, wird ein Kraftwerk im Normalbetrieb beispielsweise nur bei etwa 90% seiner Volllastleistung betrieben. Dies hat zur Folge, dass es bei Teillast typischerweise mit gegenüber der Auslegung reduziertem Wirkungsgrad betrieben wird. Die erfindungsgemässe flexible Anpassung des Betriebskonzeptes erlaubt es für ein derartiges Kraftwerk nicht nur die Wirkungsgradeinbusse durch Teillastbetrieb zu vermeiden, sondern mit dem wirkungsgradoptimierten Betriebskonzept noch eine Verbesserung des Wirkungsgrades zu realisieren. Die erforderliche Leistungsreserve kann idealerweise durch Anpassung der TIT und VIGV Limite demonstriert werden.

Je nach Stromnetz kann ausserdem eine sogenannte "Spinning Reserve" verkauft werden. Als "Spinning Reserve" ist in der Regel die Kapazität bezeichnet, die innerhalb von 10 Minuten zusätzlich an das Netz geliefert werden kann und für mindestens 2 Stunden kontinuierlich abgegeben werden kann. In einem solchen Netz bietet es sich an, das Kraftwerk mit wirkungsgradoptimiertem oder lebensdaueroptimiertem Betriebskonzept zu betreiben und die mögliche Zusatzleistung, die durch Anpassung der Limite realisiert werden kann, als "Spinning Reserve" zu verkaufen.

Die Erfindung ist nicht auf die dargestellten Betriebskonzepte und ihre Kombinationen beschränkt. Sie ist analog auf andere Betriebskonzepte übertragbar, wie z.B. auf ein Betriebskonzept für Gasturbinen mit sequentieller Verbrennung oder Betriebskonzepte ohne eine Teillastabsenkung der TIT oder Konzepte, die zusätzliche Stufungen der verschiedenen Limite vorsehen.

### Bezugszeichenliste

- 1: TIT Volllast Limit für Standard Design-Betrieb
- 2: VIGV Volllast Limit für Standard Design-Betrieb
- 3: VIGV Volllast Limit für leistungsoptimierten Betrieb
- 4: VIGV Volllast Limit für wirkungsgradoptimierten Betrieb
- 5: TIT Teillast Limit für Standard Design-Betrieb
- 6: TIT Volllast Limite für lebensdaueroptimierten Betrieb
- 7: TIT Teillast Limite für lebensdaueroptimierten Betrieb
- 8: TIT Teillast Limite für CO-optimierten Betrieb
- 9: TAT Teillastlimit für Limite für Standard Design-Betrieb
- 10: Gasturbine
- 11: TAT Teillastlimit für Limite für CO-optimierten Betrieb
- 12: Verdichter
- 14: Turbine
- 16: Welle
- 18: Generator
- 20: Brennkammer
- 21: Brennkammerkühlluft
- 22: Brennstoffzufuhr
- 23: Kühlluft
- 24: verstellbare Leitschaufelreihe
- 25: Kühlluftkühler
- 26: Filter
- 27: Rückgekühlte Kühlluft
- 28: Lufteinlass
- 29: Hochdruck- Turbinenkühlluft
- 30: Regler
- 31: Messwertaufnehmer (Kompressoreintrittsbedingungen: Temperatur, Druck und Luftfeuchtigkeit)
- 32: Messwertaufnehmer (Turbineneintrittstemperatur TIT)
- 33: Messwertaufnehmer (Kompressoraustrittsdruck)
- 34: Messwertaufnehmer (Turbinenaustrittstemperatur TAT)
- 41: Signalleitung (Kompressoreintrittsbedingungen)
- 42: Signalleitung (Turbineneintrittstemperatur TIT)
- 43: Signalleitung (Kompressorenddruck)
- 44: Signalleitung (Turbinenaustrittstemperatur TAT)
- 45: Signalleitung (VIGV Soll-Position und Ist-Position)
- 46: Signalleitung/ Signalaustausch zum Unit Kontroller
- TIT: Turbineneintrittstemperatur
- TAT: Turbinenaustrittstemperatur
- T_{cool}: Kühllufttemperatur
- VIGV: Anstellwinkel der verstellbaren Leitschaufelreihe
- Pᵣₑₗ: Relative Last bezogen auf die Volllast bei Standard
- P_{BL}: normierten Volllastleistung
- ηᵣₑₗ: relative Wirkungsgrad bei Volllast ηᵣₑₗ
- BL: Volllast
- PL: Teillast

## Patentansprüche

1. Verfahren zur Regelung einer Gasturbine (10) in einem Kraftwerk, umfassend mindestens einen Verdichter (12) mit mindestens einer verstellbaren Leitschaufelreihe (24), mindestens eine Brennkammer (20) und mindestens eine Turbine (14), wobei mindestens ein Limit des Betriebskonzeptes während des Betriebes, zur Anpassung an Optimierungsziele des Kraftwerkes bezüglich Leistung, Wirkungsgrad, Emissionen und/ oder Lebensdauerverbrauch, durch einen Kraftwerksoperator variiert wird, **dadurch gekennzeichnet dass** mindestens ein Kühllufttemperaturlimit eines rückgekühlten Kühlluftmassenstroms (27), der vom Verdichter (12) zur Kühlung von Heissgasteile der Turbine (14) abgezweigt wird, variiert wird.

2. Verfahren nach Anspruch 1 **dadurch gekennzeichnet, dass** das mindestens eine während des Betriebes variierte Limit ein schutzrelevantes Limit der Gasturbine ist.

3. Verfahren nach Anspruch 1 oder 2 **dadurch gekennzeichnet, dass** mindestens ein Volllast- Limit des Anstellwinkel (VIGV) der mindestens einen verstellbaren Leitschaufelreihe (24) des Verdichters (12) variiert wird.

4. Verfahren nach Anspruch 3 **dadurch gekennzeichnet, dass** das Volllast- Limit des Anstellwinkel (VIGV) der mindestens einen verstellbaren Leitschaufelreihe (24) des Verdichters (12) zwischen einem maximalen Limit, das durch die um einen Sicherheitshabstand reduzierte Pumpgrenze definiert ist, und einem minimalen Limit, bei dem der grösste Volllastwirkungsgrad erreicht wird, variiert wird.

5. Verfahren nach einem der Ansprüche 1 bis 4, **dadurch gekennzeichnet, dass** mindestens ein Volllast-Limit der Turbineneintrittstemperatur (TIT) und/ oder mindestens ein Teillastlimit der Turbineneintrittstemperatur (TIT) variiert wird.

6. Verfahren nach einem der Ansprüche 1 bis 5, **dadurch gekennzeichnet, dass** mindestens ein Teillast-Limit der Turbinenaustrittstemperatur (TAT) variiert wird.

7. Verfahren nach einem der Ansprüche 1 bis 6, **dadurch gekennzeichnet, dass** mindestens ein Volllast-Limit der Turbineneintrittstemperatur (TIT) und/ oder ein Teillastlimit der Turbineneintrittstemperatur (TIT) und/ oder mindestens ein Teillast-Limit der Turbinenaustrittstemperatur (TAT) gegenüber dem Standard Design Limit zur Erhöhung der Lebensdauer reduziert wird.

8. Verfahren nach einem der Ansprüche 1 bis 6, **dadurch gekennzeichnet, dass** mindestens ein Teillastlimit der Turbineneintrittstemperatur (TIT) und/ oder mindestens ein Teillast-Limit der Turbinenaustrittstemperatur (TAT) gegenüber dem Standard Design Limit zur Reduktion der CO Emissionen erhöht wird.

9. Verfahren nach einem der Ansprüche 1 bis 8, **dadurch gekennzeichnet, dass** mindestens ein Limit zur Bereitstellung von Leistungsreserven gegenüber dem Netz variiert wird.

10. Kraftwerk konfiguriert zur Durchführung des Verfahrens nach einem der Ansprüche 1 bis 10, umfassend wenigstens eine Gasturbine (10) umfassend mindestens einem Verdichter (12) mit mindestens einer verstellbaren Leitschaufelreihe (24), mindestens eine Brennkammer (20) und mindestens eine Turbine (14) sowie eine Regelung, wobei das Kraftwerk einen Regler (30) der die verschiedenen einstellbaren Limite regelt und ein Mensch-Maschine Interface zur Auswahl eines Optimierungsziels umfasst, **dadurch gekennzeichnet dass** der Regler (30) den Kühllufttemperaturlimit des rückgekühlten Kühlluftmassenstroms (27), der vom Verdichter (12) zur Kühlung von Heissgasteile der Turbine (14) abgezweigt wird, variiert.

11. Kraftwerk nach Anspruch 10 , **dadurch gekennzeichnet, dass** ein von der Turbineneintrittstemperatur (TIT) abhängiges minimales Kühlluftdruckverhältnis für den gesamten Betriebsbereich der Anstellwinkel (VIGV) der mindestens einen verstellbaren Leitschaufelreihe (24) des Verdichters (12) gewährleistet ist.

12. Kraftwerk nach einem der Ansprüche 10 oder 11 **dadurch gekennzeichnet, dass** mindestens ein Kessel der mindestens einen Gasturbine (10) nachgeschaltet ist, und dass dieser mindestens eine Kessel für alle Abgasmassenströme und Abgastemperaturen (TAT), die durch die Variation der Betriebslimite auftreten können, ausgelegt ist.

13. Kraftwerk nach Anspruch 12, **dadurch gekennzeichnet, dass** die mindestens eine Dampfturbine zur Umsetzung des maximal von dem mindestens einen Kessel bei Variation der Betriebslimite der Gasturbine (10) produzierten Dampfmassenstromes in Energie ausgelegt ist.

14. Kraftwerk nach einem der Ansprüche 10 bis 13, **dadurch gekennzeichnet, dass** die elektrischen Systeme für die maximal bei Variation der Betriebslimite der Gasturbine (10) erzeugte Leistung ausgelegt sind.

15. Kraftwerk nach einem der Ansprüche 10 bis 14, **dadurch gekennzeichnet, dass** die Brennstoffsysteme für den maximal bei Variation der Betriebslimite der Gasturbine (10) erforderlichen Brennstoffmassenstrom ausgelegt sind.

## Claims

1. Method for regulating a gas turbine (10) in a power plant, comprising at least one compressor (12) with an adjustable guide vane row (24), at least one combustion chamber (20) and at least one turbine (14), wherein at least one limit of the operating concept is varied by a power plant operator during operation in order to adapt to optimisation targets of the power plant in relation to power, efficiency, emissions and/or service life consumption, **characterised in that** at least one cooling air temperature limit of a back-cooled cooling air mass flow (27), which is branched off the compressor (12) for cooling hot gas parts of the turbine (14), is varied.

2. Method according to claim 1, **characterised in that** the at least one limit varied during operation is a protection-relevant limit of the gas turbine.

3. Method according to claim 1 or 2, **characterised in that** at least one full-load limit of the working angle (VIGV) of the at least one adjustable guide vane row (24) of the compressor (12) is varied.

4. Method according to claim 3, **characterised in that** the full-load limit of the working angle (VIGV) of the at least one adjustable guide vane row (24) of the compressor (12) is varied between a maximum limit, defined by the pumping limit reduced by a safety interval, and a minimum limit at which the greatest full-load efficiency is achieved.

5. Method according to any of claims 1 to 4, **characterised in that** at least one full-load limit of the turbine inlet temperature (TIT) and/or at least one part-load limit of the turbine inlet temperature (TIT) is varied.

6. Method according to any of claims 1 to 5, **characterised in that** at least one part-load limit of the turbine outlet temperature (TAT) is varied.

7. Method according to any of claims 1 to 6, **characterised in that** at least one full-load limit of the turbine inlet temperature (TIT) and/or a part-load limit of the turbine inlet temperature (TIT) and/or at least one part-load limit of the turbine outlet temperature (TAT) is reduced relative to the standard design limit in order to extend the service life.

8. Method according to any of claims 1 to 6, **characterised in that** at least one part-load limit of the turbine inlet temperature (TIT) and/or at least one part-load limit of the turbine outlet temperature (TAT) is increased relative to the standard design limit in order to reduce the CO emissions.

9. Method according to any of claims 1 to 8, **characterised in that** at least one limit for providing power reserves is varied relative to the network.

10. Power plant configured to perform the method according to any of claims 1 to 10, comprising at least one gas turbine (10) containing at least one compressor (12) with at least one adjustable guide vane row (24), at least one combustion chamber (20) and at least one turbine (14) and at least one regulation system, wherein the power plant comprises a regulator (30) which regulates the various adjustable limits and comprises a man-machine interface for selection of an optimisation target, **characterised in that** the regulator (30) varies the cooling air temperature limit of the back-cooled cooling air mass flow (27) which is branched off the compressor (12) for cooling hot gas parts of the turbine (14).

11. Power plant according to claim 10, **characterised in that** a minimum cooling air pressure ratio, dependent on the turbine inlet temperature (TIT), is guaranteed for the entire working range of the working angle (VIGV) of the at least one adjustable guide vane row (24) of the compressor (12).

12. Power plant according to one of claims 10 or 11, **characterised in that** at least one boiler is connected downstream of the at least one gas turbine (10), and that this at least one boiler is configured for all exhaust gas mass flows and exhaust gas temperatures (TAT) which may occur due to variation of the operating limits.

13. Power plant according to claim 12, **characterised in that** the at least one steam turbine is designed for converting into energy the maximum steam mass flow produced by the at least one boiler on variation of the operating limits of the gas turbine (10).

14. Power plant according to any of claims 10 to 13, **characterised in that** the electrical systems are configured for the maximum power generated on variation of the operating limits of the gas turbine (10).

15. Power plant according to any of claims 10 to 14, **characterised in that** the fuel systems are configured for the maximum fuel mass flow required on variation of the operating limits of the gas turbine (10).

## Revendications

1. Procédé de régulation d'une turbine à gaz (10) dans une centrale, comprenant au moins un compresseur (12) avec au moins une rangée d'aubes directrices réglables (24), au moins une chambre de combustion (20) et au moins une turbine (14), au moins une limite du concept de fonctionnement étant modifiée pendant le fonctionnement pour l'adaptation à des objectifs d'optimisation de la centrale en ce qui concerne la puissance, le rendement, les émissions et/ou la durée de vie restante, par un opérateur de centrale, **caractérisé en ce qu'**une limite de température d'air de refroidissement d'un flux massique d'air de refroidissement refroidi (27), qui est dérivé par le compresseur (12) pour le refroidissement des parts de gaz chauds de la turbine (14), est modifiée.

2. Procédé selon la revendication 1, **caractérisé en ce que** l'au moins une limite modifiée pendant le fonctionnement est une limite de la turbine à gaz importante pour sa protection.

3. Procédé selon la revendication 1 ou 2, **caractérisé en ce qu'**au moins une limite de pleine charge de l'angle d'attaque (VIGV) de l'au moins une rangée d'aubes directrices réglables (24) du compresseur (12) est modifiée.

4. Procédé selon la revendication 3, **caractérisé en ce que** la limite de pleine charge de l'angle d'attaque (VIGV) de l'au moins une rangée d'aubes directrices réglables (24) du compresseur (12) est modifiée entre une limite maximale, qui est définie par une limite de pompage réduite d'une distance de sécurité et une limite minimale pour laquelle le rendement de pleine charge le plus important est obtenu.

5. Procédé selon l'une des revendications 1 à 4, **caractérisé en ce qu'**au moins une limite de pleine charge de la température d'entrée de la turbine (TIT) et/ou au moins une limite de charge partielle de la température d'entrée de la turbine (TIT) est modifiée.

6. Procédé selon l'une des revendications 1 à 5, **caractérisé en ce qu'**au moins une limite de charge partielle de la température de sortie de la turbine (TAT) est modifiée.

7. Procédé selon l'une des revendications 1 à 6, **caractérisé en ce qu'**au moins une limite de pleine charge de la température d'entrée de la turbine (TIT) et/ou une limite de charge partielle de la température d'entrée de la turbine (TIT) et/ou au moins une limite de charge partielle de la température de sortie de la turbine (TAT) est réduite par rapport à la limite de design standard pour augmenter la durée de vie.

8. Procédé selon l'une des revendications 1 à 6, **caractérisé en ce qu'**au moins une limite de charge partielle de la température d'entrée de la turbine (TIT) et/ou au moins une limite de charge partielle de la température de sortie de la turbine (TAT) est augmentée par rapport à la limite de design standard pour diminuer les émissions de CO.

9. Procédé selon l'une des revendications 1 à 8, **caractérisé en ce qu'**au moins une limite de mise à disposition de réserves de puissance par rapport au réseau est modifiée.

10. Centrale configurée pour l'exécution du procédé selon l'une des revendications 1 à 10, comprenant au moins une turbine à gaz (10) comprenant au moins un compresseur (12) avec au moins une rangée d'aubes directrices réglables (24), au moins une chambre de combustion (20) et au moins une turbine (14) ainsi d'un dispositif de régulation, la centrale comprenant un régulateur (30) qui régule les différentes limites réglables et une interface homme-machine pour la sélection d'un objectif d'optimisation, **caractérisée en ce que** le régulateur (30) modifie la limite de température d'air de refroidissement du flux massique d'air de refroidissement refroidi (27), qui est dérivé par le compresseur (12) pour le refroidissement des parts de gaz chauds de la turbine (14).

11. Centrale selon la revendication 10, **caractérisée en ce qu'**un rapport de pression d'air de refroidissement minimal dépendant de la température d'entrée de la turbine (TIT) est garanti pour tout le domaine de fonctionnement des angles d'attaque (VIGV) de l'au moins une rangée d'aubes directrices réglables (24) du compresseur (12).

12. Centrale selon l'une des revendications 10 ou 11, **caractérisée en ce qu'**au moins une chaudière de l'au moins une turbine à gaz (10) est disposée en aval et **en ce que** cette au moins une chaudière est conçue pour tous les flux massiques de gaz d'échappement et toutes les températures de gaz d'échappement (TAT), qui peuvent survenir du fait de la variation des limites de fonctionnement.

13. Centrale selon la revendication 12, **caractérisée en ce que** l'au moins une turbine à vapeur est conçue pour la conversion du flux massique maximal de vapeur produit par l'au moins une chaudière lors d'une variation des limites de fonctionnement de la turbine à gaz (10) en énergie.

14. Centrale selon l'une des revendications 10 à 13, **caractérisée en ce que** les systèmes électriques sont conçus pour la puissance maximale générée lors de la variation des limites de fonctionnement de la turbine à gaz (10).

15. Centrale selon l'une des revendications 10 à 14, **caractérisée en ce que** les systèmes de carburant sont conçus pour le flux massique de carburant maximal nécessaire lors de la variation des limites de fonctionnement de la turbine à gaz (10).
